# EUROPÄISCHE PATENTSCHRIFT

(11) **EP 3 634 798 B1**
(45) Veröffentlichungstag und Bekanntmachung des Hinweises auf die Patenterteilung: **03.03.2021**
(21) Anmeldenummer: 18728848.5
(22) Anmeldetag: 29.05.2018
(51) Int. Cl.: B60K 1/02, B60K 7/00

(54) **ANTRIEBSVORRICHTUNG FÜR EIN KRAFTFAHRZEUG, INSBESONDERE FÜR EIN NUTZFAHRZEUG**
DRIVE DEVICE FOR A MOTOR VEHICLE, PARTICULARLY FOR A UTILITY VEHICLE
DISPOSITIF DE PROPULSION POUR UN VÉHICULE AUTOMOBILE, NOTAMMENT POUR UN VÉHICULE UTILITAIRE

(30) Priorität: 08.06.2017 DE 102017005470; 06.07.2017 DE 102017006403
(43) Veröffentlichungstag der Anmeldung: 15.04.2020
(73) Patentinhaber: Daimler AG, 70372 Stuttgart (DE)
(72) Erfinder: MAUZ, Uwe, 73730 Esslingen (DE)
(74) Vertreter: JENSEN & SON
(86) Internationale Anmeldenummer: PCT/EP2018/064001
(87) Internationale Veröffentlichungsnummer: WO 2018/224353

(56) Entgegenhaltungen:
- EP-A1- 2 772 378
- CH-A- 177 793

## Beschreibung

Die Erfindung betrifft Antriebsvorrichtung für ein Kraftfahrzeug, insbesondere für Nutzfahrzeuge, gemäß dem Oberbegriff von Patentanspruch 1.

Eine solche Antriebsvorrichtung für ein Kraftfahrzeug, insbesondere für einen Kraftwagen, ist beispielsweise bereits der DE 10 2009 033 531 A1 als bekannt zu entnehmen. Die Antriebsvorrichtung umfasst eine einer Fahrzeugachse zugeordnete erste elektrische Maschine sowie eine der Fahrzeugachse zugeordnete zweite elektrische Maschine. Außerdem weist die Antriebsvorrichtung wenigstens ein der Fahrzeugachse zugeordnetes erstes Rad und ein der Fahrzeugachse zugeordnetes zweites Rad auf. Des Weiteren ist eine der ersten elektrischen Maschine zugeordnete erste Seitenwelle vorgesehen, über welche das erste Rad von der ersten elektrischen Maschine antreibbar ist. Außerdem umfasst die Antriebsvorrichtung eine der zweiten elektrischen Maschine zugeordnete zweite Seitenwelle, über welche das zweite Rad von der zweiten elektrischen Maschine antreibbar ist.

Aus den Schriften US 1 251 749 A, FR 2 680 733 A1, GB 156 398 A sowie der gattungsgemäßen CH 177 793 A sind darüber hinaus derartige Antriebsvorrichtungen bekannt, bei denen außerdem in axialer Richtung der ersten elektrischen Maschine die zweite elektrische Maschine zwischen der ersten elektrischen Maschine und dem ersten Rad angeordnet ist; und in axialer Richtung der zweiten elektrischen Maschine die erste elektrische Maschine zwischen der zweiten elektrischen Maschine und dem zweiten Rad angeordnet ist.

Aufgabe der vorliegenden Erfindung ist es, eine Antriebsvorrichtung der eingangs genannten Art derart weiterzuentwickeln, dass sich eine besonders kompakte Anordnung und in der Folge besonders vorteilhafte Achsaufhängungskonzepte realisieren lassen.

Diese Aufgabe wird durch eine Antriebsvorrichtung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um eine Antriebsvorrichtung der im Oberbegriff des Patentanspruchs 1 angegebenen Art derart weiterzuentwickeln, dass sich eine besonders kompakte Anordnung und in der Folge besonders vorteilhafte Achsaufhängungskonzepte wie beispielsweise Verbundlenkerachsen, Schräglenkerachsen etc. realisieren lassen, wird zunächst davon ausgegangen, dass in axialer Richtung der ersten elektrischen Maschine die zweite elektrische Maschine zwischen der ersten elektrischen Maschine und dem ersten Rad angeordnet ist. Ferner ist in axialer Richtung der zweiten elektrischen Maschine die erste elektrische Maschine zwischen der zweiten elektrischen Maschine und dem zweiten Rad angeordnet. Die jeweilige axiale Richtung verläuft beispielsweise in Fahrzeugquerrichtung beziehungsweise parallel dazu oder fällt mit der Fahrzeugquerrichtung zusammen. Bei der Anordnung der zweiten elektrischen Maschine in axialer Richtung der ersten elektrischen Maschine zwischen dieser und dem ersten Rad ist nicht notwendigerweise vorgesehen, dass das erste Rad in Fahrzeugquerrichtung nach innen beziehungsweise zur ersten elektrischen Maschine hin durch die zweite elektrische Maschine überdeckt ist beziehungsweise dass die erste elektrische Maschine in Fahrzeugquerrichtung zum ersten Rad hin durch die zweite elektrische Maschine überdeckt ist.

Ferner ist beispielsweise bei der beschriebenen Anordnung der ersten elektrischen Maschine in axialer Richtung der zweiten elektrischen Maschine zwischen dieser und dem zweiten Rad nicht notwendigerweise vorgesehen, dass das zweite Rad in Fahrzeugquerrichtung nach innen beziehungsweise zur zweiten elektrischen Maschine hin durch die erste elektrische Maschine überdeckt ist beziehungsweise dass die zweite elektrische Maschine in Fahrzeugquerrichtung zum zweiten Rad hin durch die erste elektrische Maschine überdeckt ist.

Insbesondere ist unter der Anordnung der zweiten elektrischen Maschine in axialer Richtung der ersten elektrischen Maschine zwischen dieser und dem ersten Rad beispielsweise zu verstehen, dass das erste Rad in Fahrzeugquerrichtung und bezogen auf die Vorwärtsfahrtrichtung des Kraftfahrzeugs weiter rechts als die zweite elektrische Maschine angeordnet ist, und die erste elektrische Maschine ist in Fahrzeugquerrichtung bezogen auf die Vorwärtsfahrtrichtung weiter links als das erste Rad und die zweite elektrische Maschine angeordnet. Demzufolge ist beispielsweise unter der Anordnung der ersten elektrischen Maschine in axialer Richtung der zweiten elektrischen Maschine zwischen dieser und dem zweiten Rad zu verstehen, dass das zweite Rad in Fahrzeugquerrichtung und bezogen auf die Vorwärtsfahrtrichtung weiter links als die erste elektrische Maschine angeordnet ist, und die zweite elektrische Maschine ist in Fahrzeugquerrichtung und bezogen auf die Vorwärtsfahrtrichtung weiter rechts als das zweite Rad und als die erste elektrische Maschine angeordnet. Mit anderen Worten sind beispielsweise das erste Rad und die zweite elektrische Maschine in Fahrzeugquerrichtung und bezogen auf die Vorwärtsfahrtrichtung auf der rechten Seite des Kraftfahrzeugs beziehungsweise rechtsseitig der ersten elektrischen Maschine und des zweiten Rads angeordnet, wobei beispielsweise die elektrische Maschine und das zweite Rad in Fahrzeugquerrichtung und bezogen auf die Vorwärtsfahrtrichtung auf der linken Seite des Kraftfahrzeugs beziehungsweise linksseitig des ersten Rads und der zweiten elektrischen Maschine angeordnet sind.

Wieder mit anderen Worten ausgedrückt ist beispielsweise die jeweilige elektrische Maschine auf einer dem Rad, welches mittels der jeweiligen elektrischen Maschine antreibbar ist, gegenüberliegenden Seite angeordnet, wodurch sich ein besonders kompakter Aufbau darstellen lässt. In der Folge ist es beispielsweise möglich, zusätzlichen Bauraum beziehungsweise einen besonders großen Bauraum zu schaffen, um in diesem Bauraum Energiespeicher wie beispielsweise Batterien zum Speichern von elektrischer Energie beziehungsweise elektrischem Strom anordnen zu können. Dabei können die elektrischen Maschinen mit in den Energiespeichern gespeicherter elektrischer Energie versorgt werden, um dadurch beispielsweise die jeweilige elektrische Maschine in einem Motorbetrieb und somit als Elektromotor betreiben zu können. Da somit beispielsweise ein besonders großer Bauraum für wenigstens einen Energiespeicher und somit zum Speichern von elektrischer Energie zur Verfügung steht, kann eine besonders große elektrische Reichweite, über welche das Kraftfahrzeug mittels der elektrischen Maschine elektrisch angetrieben werden kann, realisiert werden.

Ferner ist es möglich, die Fahrzeugachse nach dem De-Dion-Prinzip auszugestalten und dabei als elektrisch antreibbare beziehungsweise angetriebene Achse auszubilden, sodass die erfindungsgemäße Antriebsvorrichtung als besonders vorteilhaftes elektrisch angetriebenes Achssystem dargestellt werden kann.

Ferner wird davon ausgegangen, dass der ersten elektrischen Maschine ein erstes Getriebe zugeordnet ist, über welches die erste Seitenwelle von der ersten elektrischen Maschine antreibbar ist. Dabei ist der ersten elektrischen Maschine ein zweites Getriebe zugeordnet, über welches das erste Rad von der ersten Seitenwelle antreibbar ist. Somit ist das erste Rad über das zweite Getriebe, die erste Seitenwelle und das erste Getriebe von der ersten elektrischen Maschine antreibbar.

Des Weiteren ist der zweiten elektrischen Maschine ein drittes Getriebe zugeordnet, über welches die zweite Seitenwelle von der zweiten elektrischen Maschine antreibbar ist. Außerdem ist der zweiten elektrischen Maschine ein viertes Getriebe zugeordnet, über welches das zweite Rad von der zweiten Seitenwelle antreibbar ist. Somit ist beispielsweise das zweite Rad über das vierte Getriebe, die zweite Seitenwelle und das dritte Getriebe von der zweiten elektrischen Maschine antreibbar. Die zwei je Seitenwelle beziehungsweise je Rad vorgesehenen Getriebe haben den synergetischen Effekt, dass durch die zwei je Seitenwelle beziehungsweise je Rad vorgesehenen Getriebe eine hinreichend große Übersetzung bauraumgünstig realisiert werden kann und dass eine besonders vorteilhafte Anordnung der Seitenwellen darstellbar ist, sodass die jeweilige Seitenlänge mit einer besonders großen axialen Länge ausgestaltet werden kann.

Die Portalgetriebe und/oder die E-Maschinengetriebe sind erfindungsgemäß baugleich ausgebildet und um die Fahrzeugquerrichtung relativ zueinander verdreht angeordnet, sodass beispielsweise jeweilige Abtriebe um die Fahrzeugquerrichtung relativ zueinander versetzt verdreht angeordnet und somit beispielsweise in Fahrzeughochrichtung auf unterschiedlichen Höhen angeordnet sind. Einerseits können dadurch die Kosten besonders gering gehalten werden. Andererseits kann dadurch der Bauraumbedarf in einem besonders geringen Rahmen gehalten werden.

Dem oben genannten bekannten Entwicklungsstand liegt dabei insbesondere die folgende Erkenntnis zugrunde: Üblicherweise weisen die Räder einen jeweiligen Federweg von beispielsweise 30 Zentimetern auf, um den die Räder in Fahrzeughochrichtung insbesondere relativ zu einem Rahmen beziehungsweise relativ zu einem Aufbau des Kraftfahrzeugs ein- und ausgefedert und somit bewegt werden können. Hierdurch ist es beispielsweise möglich, den Rahmen des Kraftfahrzeugs um den Federweg abzusenken, um einen Aufbau oder einen Anhänger wie beispielsweise einen Auflieger aufnehmen zu können. Dabei ist das Kraftfahrzeug beispielsweise als Zugmaschine ausgebildet, mittels welchem der Anhänger bewegt werden kann. Sind nun beispielsweise die Seitenwellen in ihrer jeweiligen axialen Erstreckung sehr kurz ausgestaltet, wie dies beispielsweise bei typischen Personenkraftwagen mit in Fahrzeugquerrichtung mittig liegendem Differential der Fall ist, so kommt es dann, wenn die Räder um ihren Federweg einfedern beziehungsweise der Rahmen um den Federweg abgesenkt wird, zu sehr hohen Beugewinkeln an den beispielsweise als Gelenkwellen ausgebildeten Seitenwellen. Mit anderen Worten kommt es insbesondere bei voller Einbeziehungsweise Ausfederung zu hohen Beugewinkeln an den beispielsweise als Gelenkwellen ausgebildeten Seitenwellen. Die Beugewinkel werden auch als Gelenkwinkel bezeichnet, wobei sehr große Beuge- beziehungsweise Gelenkwinkel zu hohen, auf die Seitenwellen wirkenden Belastungen führen.

Derartige hohe Beugewinkel und daraus resultierende, hohe Belastungen der Seitenwellen können bei der erfindungsgemäßen Antriebsvorrichtung nun vermieden werden, da bei gleichzeitiger Realisierung einer kompakten Anordnung sehr große axiale Längen der Seitenwellen realisiert werden können. Dies kann insbesondere dadurch realisiert werden, dass die erste elektrische Maschine auf einer ersten Seite angeordnet ist, während das erste Rad auf einer in Fahrzeugquerrichtung der ersten Seite gegenüberliegenden zweiten Seite angeordnet ist. Ferner ist die zweite elektrische Maschine auf der zweiten Seite angeordnet, während das zweite Rad auf der ersten Seite angeordnet ist. Dadurch kann beispielsweise die erste Seitenwelle über eine lange Strecke von der ersten elektrischen Maschine zu dem ersten Rad und somit von der ersten Seite auf die zweite Seite geführt werden, wobei auch die zweite Seitenwelle über eine besonders lange Strecke von der zweiten elektrischen Maschine zu dem zweiten Rad und somit von der zweiten Seite auf die erste Seite geführt werden kann. Dies führt zu besonders großen axialen Längen der Seitenwellen, sodass die Beugewinkel und die Belastungen der Seitenwellen besonders gering gehalten werden können. Unter der jeweiligen axialen Länge der jeweiligen Seitenwelle ist die jeweilige, in axialer Richtung der jeweiligen Seitenwelle verlaufende Erstreckung der jeweiligen Seitenwelle zu verstehen. Durch die Anordnung der jeweiligen elektrischen Maschine und des jeweils zugehörigen Rads auf den gegenüberliegenden Seiten können somit lange axiale Längen der Seitenwellen realisiert werden, wobei gleichzeitig der Bauraumbedarf der Antriebsvorrichtung besonders gering gehalten werden kann. Ferner kann die als Antriebsachse ausgebildete Fahrzeugachse nach dem De-Dion-Prinzip beziehungsweise als Portalachse ausgestaltet werden. Außerdem kann realisiert werden, dass sich die Seitenwellen über den gesamten Federweg nicht behindern, sodass große Federwege realisiert werden können, ohne dass es zu Kollisionen der Seitenwellen kommt.

Erfindungsgemäß weist die jeweilige elektrische Maschine einen Stator und einen Rotor auf, welcher um eine Drehachse relativ zu dem Stator drehbar ist, wobei die Drehachsen der Rotoren zusammenfallen und sich die Seitenwellen bezogen auf eine Einbaulage in dem Kraftfahrzeug gemäß einer entlang einer Fahrzeuglängsrichtung von hinten nach vorne verlaufender Blickrichtung nicht überkreuzen und sich gemäß einer entlang einer Fahrzeughochrichtung von oben nach unten verlaufender Blickrichtung überkreuzen.

In vorteilhafter Ausgestaltung der Erfindung ist der zuvor genannte Rahmen vorgesehen, an welchem die elektrischen Maschinen gehalten sind. Dabei sind die Räder gefedert an dem Rahmen gehalten.
Um dabei beispielsweise den Bauraumbedarf besonders gering halten zu können und übermäßig hohe ungefederte Massen zu vermeiden, ist es vorzugsweise vorgesehen, dass die Räder relativ zu dem Rahmen und relativ zu den elektrischen Maschinen zumindest um eine jeweilige, in Fahrzeugquerrichtung verlaufende Schwenkachse verschwenkbar sind, sodass dadurch beispielsweise die Räder ein- und ausfedern können. Somit ist es beispielsweise vorgesehen, dass die elektrischen Maschinen rahmenfest angeordnet sind, während die Räder relativ zu dem Rahmen und relativ zu den elektrischen Maschinen verschwenkt werden und somit ein- und ausfedern können.

Die Räder sind beispielsweise um jeweilige Raddrehachsen relativ zu dem Rahmen drehbar. Dabei müssen die Räder nicht notwendigerweise konzentrisch beziehungsweise koaxial angeordnet sein, sodass beispielsweise nicht notwendigerweise die Raddrehachsen zusammenfallen beziehungsweise koaxial zueinander angeordnet sind. Somit ist es denkbar, dass die Raddrehachsen beispielsweise exzentrisch beziehungsweise desachsiert zueinander angeordnet sind. Als besonders vorteilhaft hat es sich jedoch gezeigt, wenn die Räder koaxial beziehungsweise konzentrisch zueinander angeordnet sind, sodass die Raddrehachsen zusammenfallen.

Bei dem vorteilhaften Fall, dass die Maschinenachsen zusammenfallen, sieht eine besonders vorteilhafte Weiterbildung vor, dass zwischen den beiden elektrischen Maschinen eine Dauerbremse, zum Beispiel ein Retarder, an die Antriebsvorrichtung angebunden oder anbindbar ist, mittels welcher wenigstens eines der Räder abbremsbar ist. Besonders vorteilhaft ist dabei die Dauerbremse an einen Rotor der beiden elektrischen Maschinen oder an beide Rotoren der beiden elektrischen Maschinen angebunden oder anbindbar.

Besonders vorteilhaft ist dabei eine Abtriebsseite der ersten elektrischen Maschine in Richtung zu dem zweiten Rad gerichtet und eine Abtriebsseite der zweiten elektrischen Maschine in Richtung zu dem ersten Rad gerichtet. Insgesamt ergeben sich dadurch vorteilhafte Anordnungsmöglichkeiten sämtlicher Antriebskomponenten, die insgesamt zu einem vergrößerten möglichen Federweg der Räder führen.

Eine weitere vorteilhafte Weiterbildung sieht vor, dass das jeweilige Getriebe als Stirnradgetriebe und nicht etwa als Planetengetriebe ausgebildet ist.

Eine weitere Ausführungsform zeichnet sich dadurch aus, dass das zweite und vierte Getriebe um die jeweiligen Schwenkachsen relativ zu dem Rahmen, relativ zu den elektrischen Maschinen und relativ zu dem ersten und dritten Getriebe mit den Räder mitverschwenkbar sind. Somit sind beispielsweise das erste und dritte Getriebe rahmenfest, wobei beispielsweise das erste Getriebe an einem Gehäuse der ersten elektrischen Maschine und das dritte Getriebe an einem Gehäuse der zweiten elektrischen Maschine befestigt ist. Das erste und dritte Getriebe werden beispielsweise auch als E-Maschinengetriebe bezeichnet. Das zweite und vierte Getriebe sind beispielsweise Portalgetriebe, welche mit den Rädern relativ zu dem Rahmen mitverschwenkbar sind. Hierdurch kann eine besonders kompakte Bauform dargestellt werden.

Bei einer besonders vorteilhaften Ausführungsform der Erfindung ist es vorgesehen, dass -wie zuvor beschrieben - die Drehachsen der Rotoren der elektrischen Maschinen zusammenfallen, das heißt koaxial beziehungsweise konzentrisch zueinander angeordnet sind. Mit anderen Worten liegen hierbei die elektrischen Maschinen beziehungsweise ihre Drehachsen in einer Flucht beziehungsweise die Maschinenachsen fluchten.

Um den Bauraumbedarf besonders gering halten zu können, ist es in weiterer Ausgestaltung der Erfindung vorgesehen, dass die jeweilige Seitenwelle eine Eingangsseite und eine Ausgangsseite aufweist. Über die Eingangsseite sind von der jeweils zugeordneten elektrischen Maschine bereitgestellte Drehmomente in die jeweilige Seitenwelle einleitbar. Über die Ausgangsseite sind die Drehmomente aus der jeweiligen Seitenwelle ausleitbar und auf das jeweilige Rad übertragbar. Dabei ist die Ausgangsseite der ersten Seitenwelle in Fahrzeughochrichtung unterhalb der Eingangsseite der zweiten Seitenwelle angeordnet. Auf der jeweiligen Ausgangsseite ist beispielsweise ein Ausgangsgelenk der jeweiligen, insbesondere als Gelenkwelle ausgebildeten Seitenwelle vorgesehen, wobei beispielsweise auf der jeweiligen Eingangsseite ein jeweiliges Eingangsgelenk der Seitenwelle vorgesehen ist. Somit ist es beispielsweise vorgesehen, dass das Ausgangsgelenk der ersten Seitenwelle in Fahrzeughochrichtung unterhalb des Eingangsgelenks der zweiten Seitenwelle liegt. Die jeweilige Seitenwelle erstreckt sich somit beispielsweise von der jeweils zugeordneten elektrischen Maschine zu dem jeweils zugehörigen Rad nicht nur in Fahrzeugquerrichtung, sondern auch in Fahrzeughochrichtung, sodass auf bauraumgünstige Weise eine besonders große axiale Länge der jeweiligen Seitenwelle dargestellt werden kann.

Um dabei die Kosten besonders gering halten zu können, ist es vorzugsweise vorgesehen, dass die erste Seitenwelle um die Fahrzeuglängsrichtung rotationssymmetrisch zur zweiten Seitenwelle angeordnet ist. Somit sind die Seitenwellen beispielsweise baugleich ausgebildet, wobei beispielsweise die erste Seitenwelle um die Fahrzeugquerrichtung um 180 Grad verdreht zur zweiten Seitenwelle verbaut ist beziehungsweise umgekehrt.

Um den Bauraumbedarf besonders gering zu halten, überkreuzen sich beispielsweise die Seitenwellen bezogen auf eine senkrecht zur Fahrzeughochrichtung verlaufende Ebene beziehungsweise in entlang der Fahrzeughochrichtung verlaufender Blickrichtung von oben nach unten auf die Antriebsvorrichtung. Mit anderen Worten verlaufen die Seitenwellen beispielsweise über Kreuz. Ferner ist es denkbar dass sich die Seitenwellen, insbesondere bezogen auf eine senkrecht zur Fahrzeuglängsrichtung verlaufende Ebene beziehungsweise in in Fahrzeuglängsrichtung von hinten nach vorne verlaufender Blickrichtung auf die Antriebsvorrichtung nicht überkreuzen. Hierdurch können beispielsweise große Federwege realisiert werden, ohne dass sich die Seitenwellen beim vollständigen Ein- beziehungsweise Ausfedern der Räder gegenseitig berühren.

Der Rahmen weist beispielsweise zwei in Fahrzeugquerrichtung voneinander beabstandete Längsträger auf, welche beispielsweise über wenigstens einen Querträger des Rahmens miteinander verbunden sein können. Dabei ist es vorzugsweise vorgesehen, dass die elektrischen Maschinen in Fahrzeughochrichtung unterhalb der Längsträger des auch als Fahrzeugrahmen bezeichneten Rahmens angeordnet sind.

Bei einer weiteren Ausführungsform der Erfindung ist wenigstens ein Energiespeicher zum Speichern von elektrischer Energie beziehungsweise elektrischem Strom vorgesehen, wobei der Energiespeicher als Batterie ausgebildet sein kann. Insbesondere ist die Batterie als Hochvolt-Komponente und somit als Hochvolt-Batterie (HV-Batterie) ausgebildet, sodass der Energiespeicher beispielsweise eine elektrische Spannung, insbesondere eine elektrische Betriebsspannung, von über 60 Volt, insbesondere von mehreren hundert Volt, aufweist. Dadurch können besonders hohe elektrische Leistungen zum Antreiben des Kraftfahrzeugs realisiert werden. Dabei hat es sich als besonders vorteilhaft gezeigt, wenn der Energiespeicher in Fahrzeughochrichtung oberhalb der elektrischen Maschinen, insbesondere im Bereich der Längsträger, angeordnet ist, wobei beispielsweise der Energiespeicher zumindest teilweise in Fahrzeugquerrichtung zwischen den Längsträgern und dabei zumindest teilweise oberhalb der elektrischen Maschinen angeordnet ist, sodass beispielsweise zumindest jeweilige Teilbereiche der elektrischen Maschinen in Fahrzeughochrichtung nach oben hin durch den Energiespeicher überdeckt sind.

Schließlich hat es sich als vorteilhaft gezeigt, wenn wenigstens eine Kupplung vorgesehen ist, mittels welcher die Maschinenachsen beziehungsweise die Rotoren der elektrischen Maschinen drehfest miteinander verbindbar sind. Dabei ist es insbesondere vorgesehen, dass die Kupplung beispielsweise zumindest teilweise, insbesondere zumindest überwiegend oder vollständig, in Fahrzeugquerrichtung zwischen den elektrischen Maschinen angeordnet ist. Alternativ oder zusätzlich kann in Fahrzeuglängsrichtung zwischen den elektrischen Maschinen eine Bremseinrichtung, wie beispielsweise ein Retarder beziehungsweise eine Dauerbremse vorgesehen sein, wobei mittels der Bremseinrichtung beispielsweise die Rotoren und beispielsweise über diese die Räder abbremsbar sind.

Um die Kosten besonders gering halten zu können, sind die elektrischen Maschinen vorzugsweise baugleich ausgebildet. Beide elektrischen Maschinen weisen beispielsweise jeweils zumindest zwei Halterungsanbindungen auf, um eine wahlweise beziehungsweise bedarfsgerechte Anbindung an den Rahmen realisieren zu können. Eine der jeweiligen Halterungsanbindungen ist beispielsweise auf einer in Fahrzeughochrichtung nach oben weisenden Oberseite angeordnet, wobei die andere Halterungsanbindung beispielsweise auch an einer in Fahrzeughochrichtung nach unten weisenden Unterseite angeordnet ist. Die Halterungsanbindungen werden auch als Halterungen bezeichnet, wobei der Energiespeicher beispielsweise in Fahrzeugquerrichtung zwischen den Halterungen der elektrischen Maschinen beziehungsweise zumindest in der Flucht zwischen diesen Halterungen beziehungsweise zwischen den Längsträgern angeordnet ist.

Dabei ist es denkbar, dass die elektrischen Maschinen um ihre jeweiligen Maschinenachsen beziehungsweise um die Fahrzeugquerrichtung gegeneinander verdreht sind, sodass beispielsweise die jeweilige Eingangsseite bedarfsgerecht auf einem jeweiligen Höhenniveau in Fahrzeughochrichtung angeordnet werden kann. Somit ist es beispielsweise möglich, die Eingangsseite der ersten Seitenwelle in Fahrzeughochrichtung so weit unterhalb der Eingangsseite der zweiten Seitenwelle anzuordnen, dass die Ausgangswelle der ersten Seitenwelle unterhalb der Eingangswelle der zweiten Seitenwelle ist. Alternativ oder zusätzlich sind die Portalgetriebe in Fahrzeugquerrichtung relativ zueinander verdreht angeordnet, um die Seitenwellen über ihre Ausgangsseiten, die in Fahrzeughochrichtung auf unterschiedlichen Höhenniveaus angeordnet sind, an die Portalgetriebe anbinden zu können.

Insgesamt ist es möglich, die Seitenwellen, die elektrischen Maschinen und die beispielsweise nabenseitigen Portalgetriebe so anzuordnen, dass in Einbaulage ein minimaler Gelenkwinkel entsteht und die Seitenwellen sich über den gesamten Federweg nicht gegenseitig behindern. Dabei liegen die auch als Seitengelenkwellen bezeichneten Seitenwellen beispielsweise in unterschiedlichen Horizontalebenen und sind ansonsten symmetrisch zueinander angeordnet.

Weitere Vorteile, Merkmale und Einzelheiten der Erfindung ergeben sich aus der nachfolgenden Beschreibung eines bevorzugten Ausführungsbeispiels sowie anhand der Zeichnung.

Die Zeichnung zeigt in:
- Fig. 1: eine schematische Draufsicht einer erfindungsgemäßen Antriebsvorrichtung für ein Kraftfahrzeug, insbesondere für ein Nutzfahrzeug;
- Fig. 2: eine schematische Rückansicht der Antriebsvorrichtung;
- Fig. 3: eine schematische und perspektivische Seitenansicht der Antriebsvorrichtung;
- Fig. 4: eine schematische Perspektivansicht der Antriebsvorrichtung; und
- Fig. 5: ausschnittsweise eine schematische Perspektivansicht des als Nutzfahrzeug ausgebildeten Kraftfahrzeugs mit der Antriebsvorrichtung.

In den Fig. sind gleiche oder funktionsgleiche Elemente mit gleichen Bezugszeichen versehen.

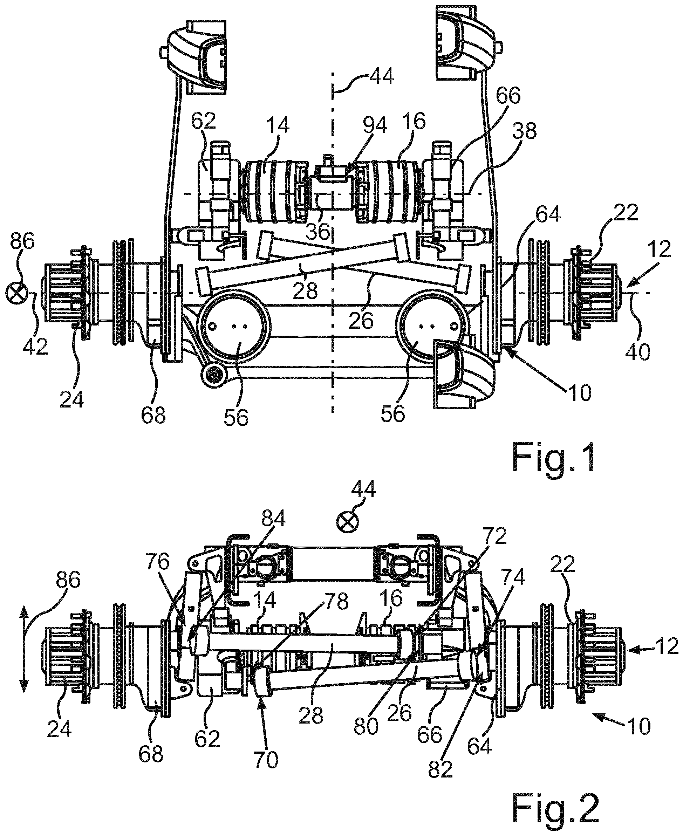

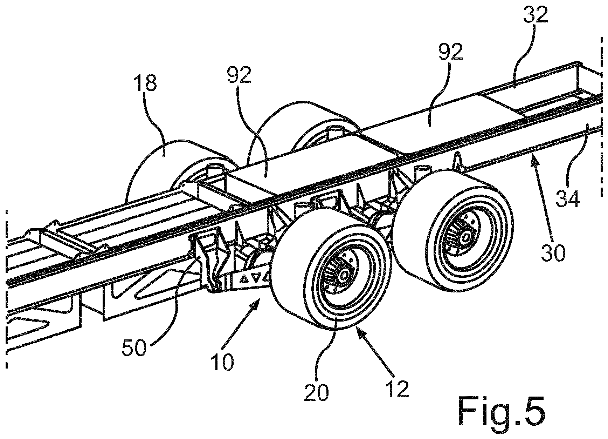

Fig. 1 zeigt in einer schematischen Draufsicht eine im Ganzen mit 10 bezeichnete Antriebsvorrichtung für ein Kraftfahrzeug, welches in Fig. 5 ausschnittsweise erkennbar und als Nutzfahrzeug, insbesondere als Zugfahrzeug, ausgebildet ist. Besonders gut aus einer Zusammenschau von Fig. 1, 2 und 5 ist erkennbar, dass die Antriebsvorrichtung 10 eine einer Fahrzeugachse 12 des Kraftfahrzeugs zugeordnete erste elektrische Maschine 14 und eine derselben Fahrzeugachse 12 zugeordnete zweite elektrische Maschine 16 aufweist. Wie im Folgenden noch genauer erläutert wird, ist die jeweilige elektrische Maschine 14 beziehungsweise 16 in einem Motorbetrieb und somit als Elektromotor betreibbar.

Außerdem weist die Antriebsvorrichtung 10 wenigstens ein der Fahrzeugachse 12 zugeordnetes erstes Rad 18 und ein dem ersten Rad 18 in Fahrzeugquerrichtung gegenüberliegendes und der Fahrzeugachse 12 zugeordnetes zweites Rad 20 auf. Die Räder 18 und 20 sind Bodenkontaktelemente, welche bei einer Fahrt des Kraftfahrzeugs entlang einer Fahrbahn auf der Fahrbahn abrollen. Aus Fig. 1 ist erkennbar, dass dem ersten Rad 18 und somit der ersten elektrischen Maschine 14 eine beispielsweise auf einem Achszapfen drehbar gelagerte erste Radnabe 22 zugeordnet ist, mit welcher das Rad 18 drehfest verbunden beziehungsweise verbindbar ist. Dementsprechend ist dem zweiten Rad 20 und somit der zweiten elektrischen Maschine 16 eine beispielsweise auf einem Achszapfen drehbar gelagerte zweite Radnabe 24 zugeordnet, mit welcher das zweite Rad 20 drehfest verbunden beziehungsweise verbindbar ist.

Die Antriebsvorrichtung 10 umfasst ferner eine der ersten elektrischen Maschine 14 zugeordnete erste Seitenwelle 26, welche von der ersten elektrischen Maschine 14 antreibbar ist. Dabei sind die erste Radnabe 22 und somit das erste Rad 18 über die erste Seitenwelle 26 von der ersten elektrischen Maschine 14, insbesondere in deren Motorbetrieb, antreibbar. Die Antriebsvorrichtung 10 umfasst ferner eine der zweiten elektrischen Maschine 16 zugeordnete zweite Seitenwelle 28, über welche die zweite Radnabe 24 und somit das zweite Rad 20 von der zweiten elektrischen Maschine 16 antreibbar sind. Dies bedeutet, dass die jeweilige elektrische Maschine 14 beziehungsweise 16 Drehmomente bereitstellen kann, die von der jeweiligen elektrischen Maschine 14 beziehungsweise 16 über die jeweilige Seitenwelle 26 beziehungsweise 28 zu der jeweiligen Radnabe 22 beziehungsweise 24 und somit zu dem jeweiligen Rad 18 beziehungsweise 20 geleitet werden. Dadurch kann das jeweilige Rad 18 beziehungsweise 20 von dem von der jeweiligen elektrischen Maschine 14 beziehungsweise 16 bereitgestellten Drehmomenten angetrieben werden, sodass das Kraftfahrzeug insgesamt mittels der elektrischen Maschinen 14 und 16 und somit elektrisch antreibbar ist.

Die Antriebsvorrichtung 10 umfasst ferner einen Rahmen 30 für das Kraftfahrzeug, wobei der Rahmen 30 auch als Fahrzeugrahmen bezeichnet wird. Besonders gut aus Fig. 5 ist erkennbar, dass der Rahmen 30 wenigstens zwei in Fahrzeugquerrichtung voneinander beabstandete Längsträger 32 und 34 aufweist, welche beispielsweise über wenigstens einen in Fig. 5 nicht erkennbaren Querträger des Rahmens 30 miteinander verbunden sind. Wie im Folgenden noch genauer erläutert wird, sind die beispielsweise als Portalachse ausgebildete Fahrzeugachse 12 und somit die Räder 18 und 20 gefedert beziehungsweise federnd an dem Rahmen 30 gehalten, sodass beispielsweise die Räder 18 und 20 relativ zu dem Rahmen 30 und insbesondere relativ zu den elektrischen Maschinen 14 und 16 in Fahrzeughochrichtung ein- und ausfedern können. Dabei können die Räder 18 und 20 über einen Federweg ein- und ausfedern, wobei der Federweg zumindest im Wesentlichen in Fahrzeughochrichtung verläuft und beispielsweise mehr als zehn Zentimeter, insbesondere mehr als zwanzig Zentimeter und vorzugsweise mindestens dreißig Zentimeter beträgt.

Die die jeweilige elektrische Maschine 14 beziehungsweise 16 weist jeweils einen in den Fig. nicht dargestellten Stator und jeweils einen in den Fig. nicht erkennbaren Rotor auf, welcher um eine jeweilige Drehachse 36 beziehungsweise 38 relativ zu dem Stator drehbar ist. Dabei ist der Rotor der elektrischen Maschine 14 um die Drehachse 36 relativ zu dem Stator der elektrischen Maschine 14 drehbar, wobei der Rotor der elektrischen Maschine 16 um die Drehachse 38 relativ zu dem Stator der elektrischen Maschine 16 drehbar ist. Dabei verläuft die jeweilige Drehachse 36 beziehungsweise 38 in axialer Richtung der jeweiligen elektrischen Maschine 14 beziehungsweise 16 beziehungsweise die jeweilige Drehachse 36 beziehungsweise 38 fällt mit der jeweiligen axialen Richtung der jeweiligen elektrischen Maschine 14 beziehungsweise 16 zusammen. Dabei wird die jeweilige Drehachse 36 beziehungsweise 38 auch als Maschinenachse bezeichnet. Darüber hinaus sind die jeweilige Radnabe 22 beziehungsweise 24 und somit das jeweilige Rad 18 beziehungsweise 20 um eine jeweilige Drehachse 40 beziehungsweise 42 relativ zu dem Rahmen 30 drehbar, wobei die jeweilige Drehachse 40 beziehungsweise 42 auch als Raddrehachse bezeichnet wird. Aus Fig. 1 ist erkennbar, dass die Radnabe 22 und das zugehörige Rad 18 um die Drehachse 40 relativ zu dem Rahmen 30 drehbar sind, wobei die Radnabe 24 und das zugehörige Rad 20 um die Drehachse 42 relativ zu dem Rahmen 30 drehbar sind. Dabei verlaufen die Drehachsen 40 und 42 in Fahrzeugquerrichtung beziehungsweise fallen mit dieser zusammen. Bei dem in den Fig. veranschaulichten Ausführungsbeispiel sind die elektrischen Maschinen 14 und 16 derart angeordnet, dass die Drehachsen 36 und 38 ebenfalls in Fahrzeugquerrichtung verlaufen beziehungsweise mit dieser zusammenfallen, wobei die Drehachsen 36 und 38 zusammenfallen. Auch die Drehachsen 40 und 42 fallen zusammen. Ferner verlaufen beispielsweise die Drehachsen 36 und 38 parallel zu den Drehachsen 40 und 42, wobei jedoch die Drehachsen 36 und 38 in Fahrzeuglängsrichtung versetzt zu den Drehachsen 40 und 42 angeordnet sind. Somit sind die Drehachsen 36 und 38 exzentrisch beziehungsweise desachsiert zu den Drehachsen 40 und 42 angeordnet.

Um nun eine besonders kompakte Anordnung beziehungsweise Bauform der Antriebsvorrichtung 10 und in der Folge besonders vorteilhafte Achsaufhängungskonzepte realisieren zu können, ist es bei der Antriebsvorrichtung 10 vorgesehen, dass in axialer Richtung der ersten elektrischen Maschine 14 die zweite elektrische Maschine 16 zwischen der ersten elektrischen Maschine 14 und dem ersten Rad 18 beziehungsweise der ersten Radnabe 22 angeordnet ist. Ferner ist in axialer Richtung der zweiten elektrischen Maschine 16 die erste elektrische Maschine 14 zwischen der zweiten elektrischen Maschine 16 und dem zweiten Rad 20 beziehungsweise der zweiten Radnabe 24 angeordnet. Diese Anordnungen der elektrischen Maschine 14 und 16 gelten insbesondere für eine jeweilige Projektion der elektrischen Maschinen 14 und 16 und der Räder 18 und 20 auf eine senkrecht zur Fahrzeuglängsrichtung verlaufende Ebene, wobei die Fahrzeuglängsrichtung in Fig. 1 durch eine strichpunktierte Linie 44 veranschaulicht ist. Mit anderen Worten ist es bei der Antriebsvorrichtung 10 vorgesehen, dass die erste elektrische Maschine 14 und das zweite Rad 20 in Fahrzeugquerrichtung und bezogen auf die Vorwärtsfahrtrichtung auf der linken Seite der Antriebsvorrichtung 10 beziehungsweise des Rahmens 30 des Kraftfahrzeugs angeordnet sind, während die zweite elektrische Maschine 16 und das erste Rad 18 in Fahrzeugquerrichtung bezogen auf die Vorwärtsfahrtrichtung auf der rechten Seite der Antriebsvorrichtung 10 beziehungsweise des Rahmens 30 oder des Kraftfahrzeugs angeordnet sind. Somit ist das jeweilige Rad 18 beziehungsweise 20 auf einer der elektrischen Maschine 14 beziehungsweise 16, mittels welcher das jeweilige Rad 18 beziehungsweise 20 antreibbar ist, in Fahrzeugquerrichtung gegenüberliegenden Seite angeordnet.

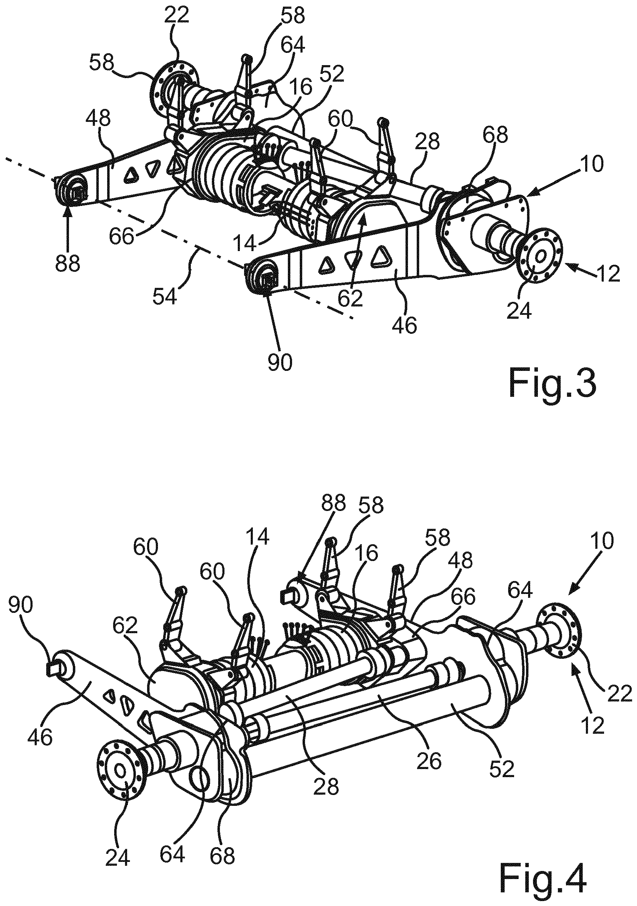

Hierdurch kann eine besonders große axiale Länge der jeweiligen Seitenwelle 26 beziehungsweise 28 realisiert werden, sodass übermäßige Gelenk- beziehungsweise Beugewinkel der als Gelenkwellen ausgebildeten Seitenwellen 26 und 28, insbesondere auch bei einem vollständigen Ein- und Ausfedern der Räder 18 und 20, vermieden werden können. Besonders gut aus Fig. 3 und 4 ist erkennbar, dass die Fahrzeugachse 12 bei dem in den Fig. veranschaulichten Ausführungsbeispiel als Verbundlenkerachse ausgebildet ist und dabei wenigstens zwei in Fahrzeugquerrichtung voneinander beabstandete Lenkerelemente in Form von Schwertern 46 und 48 aufweist, welche verschwenkbar an dem Rahmen 30, insbesondere über jeweilige Lagerböcke, gehalten sind. Von den genannten Lagerböcken ist der in Fahrzeugquerrichtung und bezogen auf die Vorwärtsfahrtrichtung linke, in Fig. 5 mit 50 bezeichnete Lagerbock erkennbar. Die Schwerter 46 und 48 sind beispielsweise über ein Querelement 52 miteinander verbunden und somit gemeinsam relativ zu dem Rahmen 30 um eine in Fig. 3 erkennbare Schwenkachse 54 verschwenkbar. Somit sind die an den Schwertern 46 und 48 gehaltenen Radnaben 22 und 24 und somit die Räder 18 und 20 relativ zu dem Rahmen 30 um die Schwenkachse 54 mit den Schwertern 46 und 48 mitverschwenkbar. Dabei sind beispielsweise besonders gut aus Fig. 1 erkennbare Abstützelemente 56 vorgesehen, an welchen beispielsweise Federelemente, insbesondere Luftfedern beziehungsweise Federbälge für Luftfedern abstützbar sind. Dadurch können die Schwerter 46 und 48 und somit die Fahrzeugachse 12 insgesamt über die Luftfedern federn beziehungsweise gefedert an dem Rahmen 30 abgestützt und gehalten werden.

Aus Fig. 3 und 4 ist erkennbar, dass je elektrische Maschine 14 beziehungsweise 16 mehrere, das heißt wenigstens zwei Halterungen 58 beziehungsweise 60 vorgesehen sind, über welche die jeweilige elektrische Maschine 14 beziehungsweise 16 an dem Rahmen 30 gehalten ist. Die elektrischen Maschinen 14 und 16 sind somit rahmenfest, sodass die Räder 18 und 20 relativ zu dem Rahmen 30 und relativ zu den elektrischen Maschinen 14 und 16 um die in Fahrzeugquerrichtung verlaufende Schwenkachse 54 verschwenkbar sind.

Des Weiteren ist der elektrischen Maschine 14 ein erstes Getriebe 62 zugeordnet, über welches die erste Seitenwelle 26 von der ersten elektrischen Maschine 14 antreibbar ist. Des Weiteren ist der ersten elektrischen Maschine 14 ein zweites Getriebe 64 zugeordnet, über welches die erste Radnabe 22 und somit das erste Rad 18 von der ersten Seitenwelle 26 antreibbar sind. Dementsprechend ist der zweiten elektrischen Maschine 16 ein drittes Getriebe 66 zugeordnet, über welches die zweite Seitenwelle 28 von der zweiten elektrischen Maschine 16 antreibbar ist. Außerdem ist der zweiten elektrischen Maschine 16 ein viertes Getriebe 68 zugeordnet, über welches die zweite Radnabe 24 und somit das zweite Rad 20 von der zweiten Seitenwelle 28 antreibbar sind. Das erste und dritte Getriebe 62 und 66 wird auch als E-Maschinengetriebe bezeichnet und ist beispielsweise ein in die jeweilige elektrische Maschine 14 beziehungsweise 16 integriertes Getriebe, welches beispielsweise eine Übersetzung i=6 aufweist. Die Getriebe 62 und 66 sind rahmenfest, sodass die Räder 18 und 20 um die Schwenkachse 54 relativ zu dem Rahmen 30, relativ zu den elektrischen Maschinen 14 und 16 und relativ zu den Getrieben 62 und 66 verschwenkbar sind. Die Getriebe 64 und 68 jedoch sind Portalgetriebe, welche an den Schwertern 46 und 48 gehalten sind. Somit sind die Getriebe 64 und 68 um die Schwenkachse 54 relativ zu dem Rahmen 30, relativ zu den elektrischen Maschinen 14 und 16 und relativ zu den Getrieben 62 und 66 mit den Rädern 18 und 20 mitverschwenkbar. Das jeweilige Getriebe 64 beziehungsweise 68 (Portalgetriebe) weist beispielsweise über eine Übersetzung i=4,3 auf. Insgesamt ist erkennbar, dass je Seitenwelle 26 beziehungsweise 28 und somit je Rad beziehungsweise 20 zwei Getriebe 62 und 64 beziehungsweise 66 und 68 vorgesehen sind. Diese jeweiligen zwei Getriebe 62 und 64 beziehungsweise 66 und 68 haben den synergetischen Effekt, dass auf besonders bauraumgünstige Weise eine besonders vorteilhafte, insbesondere eine besonders hohe, Übersetzung geschaffen werden kann. Dabei ist es optional denkbar, dass beispielsweise bezogen auf einen Drehmomentenfluss von dem jeweiligen Portalgetriebe zu dem jeweiligen Rad 18 beziehungsweise 20 zwischen dem jeweiligen Portalgetriebe und dem jeweils zugehörigen Rad 18 beziehungsweise 20 ein weiteres Getriebe, insbesondere ein Reduktionsgetriebe, angeordnet ist, wobei das weitere Getriebe beispielsweise als Nabengetriebe, insbesondere als Nabenreduziergetriebe, ausgebildet und demzufolge beispielsweise in die jeweilige Radnabe 22 beziehungsweise 24 integriert ist.

Das jeweilige E-Maschinengetriebe ist eine beispielsweise an die jeweilige elektrische Maschine 14 beziehungsweise 16 angebaute Getriebestufe, welche vorzugsweise als schaltbare Getriebestufe ausgebildet ist und somit beispielsweise wenigstens zwei schaltbare Gänge, insbesondere mit voneinander unterschiedlichen Übersetzungen, aufweist. Das jeweilige Getriebe 64 beziehungsweise 68 ist ein nabenseitiges Portalgetriebe, welches beispielsweise als Hohlrad- oder Stirnradgetriebe ausgebildet sein kann. Besonders gut aus Fig. 2 ist erkennbar, dass die jeweilige Seitenwelle 26 beziehungsweise 28 eine Eingangsseite 70 beziehungsweise 72 aufweist, wobei die Eingangsseite der ersten Seitenwelle 26 mit 70 und die Eingangsseite der zweiten Seitenwelle 28 mit 72 bezeichnet ist. Ferner weist die jeweilige Seitenwelle 26 beziehungsweise 28 eine Ausgangsseite 74 beziehungsweise 76 auf, wobei die Ausgangsseite der ersten Seitenwelle 26 mit 74 und die Ausgangsseite der zweiten Seitenwelle 28 mit 76 bezeichnet ist. Dabei sind von der elektrischen Maschine 14 beziehungsweise 16 bereitgestellte Drehmomente über die jeweilige Eingangsseite 70 beziehungsweise 72 in die jeweilige Seitenwelle 26 beziehungsweise 28 einleitbar. Des Weiteren sind die in die Seitenwelle 26 beziehungsweise 28 eingeleiteten Drehmomente über die jeweilige Ausgangsseite 74 beziehungsweise 76 aus der jeweiligen Seitenwelle 26 beziehungsweise 28 ausleitbar und auf die jeweilige Radnabe 22 beziehungsweise 24 beziehungsweise auf das jeweilige Rad 18 beziehungsweise 20 übertragbar.

Dabei ist die Seitenwelle 26 über ihre Eingangsseite 70 an das Getriebe 62, insbesondere an einen Abtrieb 78 des Getriebes 62, angebunden, sodass die Seitenwelle 26 über die Eingangsseite 70 und ein Abtrieb 78 von dem Getriebe 62 angetrieben werden kann. Dementsprechend ist die Seitenwelle 28 über ihre Eingangsseite 72 an das Getriebe 66, insbesondere an einen Abtrieb 80 des Getriebes 66, angebunden, sodass die Seitenwelle 28 über die Eingangsseite 72 und den Abtrieb 80 von dem Getriebe 66 angetrieben werden kann. Ferner ist die erste Seitenwelle 26 über ihre Ausgangsseite 74 an das Getriebe 64, insbesondere an einen Eingang 82 des Getriebes 64, angebunden, sodass das Getriebe 64 über den Eingang 82 und die Ausgangsseite 74 von der Seitenwelle 26 angetrieben werden kann. Dementsprechend ist die Seitenwelle 28 über ihre Ausgangsseite 76 an das Getriebe 68, insbesondere an einen Eingang 84 des Getriebes 68, angebunden, sodass das Getriebe 68 über den Eingang 84 und die Ausgangsseite 76 von der Seitenwelle 28 angetrieben werden kann. Die elektrischen Maschinen 14 und 16 sind beispielsweise baugleich ausgestaltet.

Auch die Getriebe 62 und 66 sind baugleich ausgestaltet. Somit bilden beispielsweise die elektrische Maschine 14 und das Getriebe 62 eine erste Antriebseinheit, wobei die elektrische Maschine 16 und das Getriebe 66 beispielsweise eine zweite Antriebseinheit bilden. Auch die als Portalgetriebe ausgebildeten Getriebe 64 und 68 sind beispielsweise baugleich ausgestaltet. Dabei ist besonders gut aus Fig. 2 erkennbar, dass die Ausgangsseite 74 der Seitenwelle 26 in Fahrzeughochrichtung unterhalb der Eingangsseite 72 der Seitenwelle 28 angeordnet ist, wobei in Fig. 2 die Fahrzeughochrichtung durch einen Doppelpfeil 86 veranschaulicht ist. Ferner ist die Ausgangsseite 74 in Fahrzeughochrichtung unter der Ausgangsseite 76 angeordnet, wobei die Eingangsseite 70 in Fahrzeughochrichtung unterhalb der Ausgangsseite 74, unterhalb der Eingangsseite 72 und unterhalb der Ausgangsseite 76 angeordnet ist. Um dies zu realisieren, sind die elektrischen Maschinen 14 und 16 und somit die Getriebe 62 und 66, das heißt die Antriebseinheiten um die Fahrzeugquerrichtung dabei insbesondere um die bei dem in den Fig. veranschaulichten Ausführungsbeispiel koaxial beziehungsweise konzentrisch zueinander angeordneten Drehachsen 36 und 38 zueinander verdreht.

Auch die Getriebe 64 und 68 sind baugleich ausgestaltet und, insbesondere um die Fahrzeugquerrichtung beziehungsweise um die bei dem in den Fig. veranschaulichten Ausführungsbeispiel koaxial beziehungsweise konzentrisch zueinander angeordneten Drehachsen 40 und 42, zueinander verdreht, sodass die Eingangsseite 72 und die Ausgangsseite 74 in Fahrzeughochrichtung auf solch unterschiedlichen Höhenniveaus angeordnet werden können, dass die Ausgangsseite 74 in Fahrzeughochrichtung unterhalb der Eingangsseite 72 angeordnet ist. Mit anderen Worten sind die elektrischen Maschinen 14 und 16 mit den zuvor beschriebenen angebauten Getriebestufen und die nabenseitigen Portalgetriebe jeweils so, insbesondere um die Fahrzeugquerrichtung, gegeneinander verdreht angeordnet, dass die beispielsweise durch jeweilige Getriebeflansche gebildeten oder jeweilige Getriebeflansche umfassenden Eingänge 82 und 84 in zwei unterschiedlichen Horizontalebenen liegen beziehungsweise in Fahrzeughochrichtung in unterschiedlichen Höhenniveaus angeordnet sind, insbesondere derart, dass die Ausgangsseite 74 und somit der Eingang 82 in Fahrzeughochrichtung unterhalb der Eingangsseite 72 und somit des Abtriebs 80 angeordnet sind.

Bei dem in den Fig. veranschaulichten Ausführungsbeispiel fallen die Drehachsen 36 und 38 zusammen, sodass die elektrische Maschinen 14 und 16 koaxial beziehungsweise konzentrisch zueinander angeordnet sind und somit in einer Flucht liegen. Ferner sind bei dem in den Fig. veranschaulichten Ausführungsbeispiel die Drehachsen 40 und 42 koaxial beziehungsweise konzentrisch zueinander angeordnet, sodass die Drehachsen 40 und 42 zusammenfallen beziehungsweise in einer Flucht liegen.

Fig. 2 zeigt die Antriebsvorrichtung 10 gemäß entlang der Fahrzeuglängsrichtung von hinten nach vorne verlaufender Blickrichtung. Wie aus Fig. 2 erkennbar ist, überkreuzen sich die Seitenwellen 26 und 28 bezogen auf die genannte Blickrichtung und somit bezogen auf eine senkrecht zur Fahrzeuglängsrichtung verlaufende Ebene nicht. Demgegenüber zeigt Fig. 1 die Antriebsvorrichtung 10 gemäß einer entlang der Fahrzeughochrichtung von oben nach unten verlaufenden Blickrichtung. Bezogen auf diese in Fig. 1 gezeigte Blickrichtung und somit bezogen auf eine senkrecht zur Fahrzeughochrichtung verlaufenden Ebene überkreuzen sich jedoch die Seitenwellen 26 und 28, sodass ihre jeweiligen axialen Längen besonders groß ausgestaltet werden können.

Wie bereits zuvor erwähnt, sind die beispielsweise als Verbundlenkerachse ausgebildete Fahrzeugachse 12 und somit die Räder 18 und 20 und die Schwerter 46 und 48 über die genannten, beispielsweise als Luftfedern ausgebildeten Federelemente an dem Rahmen 10 gefedert abstützbar beziehungsweise abgestützt. Außerdem sind beispielsweise die Schwerter 46 und 48 und somit die Fahrzeugachse 12 insgesamt beispielsweise über gummierte Gelenke 88 und 90 verschwenkbar an dem Rahmen 30 beziehungsweise an den Lagerböcken gelagert. Dabei sind beispielsweise die gummierten Gelenke 88 und 90 und die Räder 18 und 20 an in Fahrzeuglängsrichtung gegenüberliegenden Enden der Schwerter 46 und 48 vorgesehen.

Vorzugsweise ist zumindest eines der Getriebe 62 und 64 beziehungsweise 66 und 68 als schaltbares Getriebe ausgebildet und weist somit wenigstens zwei Gänge auf. Vorzugsweise ist das schaltbare Getriebe das maschinenseitige Getriebe 62 beziehungsweise 66, welches ein rahmenfesten beziehungsweise fahrzeugfestes Getriebe ist, da es, insbesondere über die jeweilige elektrische Maschine 14 beziehungsweise 16, an dem Rahmen 30 gehalten ist. Das jeweilige Portalgetriebe ist an dem jeweiligen Schwert 46 beziehungsweise 48 gehalten und schwenkt somit mit dem jeweiligen Schwert 46 beziehungsweise 48 relativ zu dem Rahmen 30 mit. Das jeweilige Portalgetriebe hat insbesondere den Zweck, eine vorteilhafte Übersetzung bereitzustellen und somit eine vorteilhafte Übersetzungsstufe darzustellen. Ferner hat das jeweilige Portalgetriebe den Zweck, dass die jeweilige Seitenwelle 26 beziehungsweise 28, insbesondere über ihren jeweiligen Gelenkwellenflansch, vorteilhaft an das jeweilige Portalgetriebe angebunden werden kann. Da die Portalgetriebe mit den Schwertern 46 und 48 mitschwenken, schwenken auch die Eingänge 82 und 84 und somit die Ausgangsseiten 74 und 76 mit, sodass die Ausgangsseiten 74 und 76 relativ zu den Eingangsseiten 70 und 72 verschwenken. Die jeweilige Eingangsseite 70 und 72 ist dabei ein maschinenseitiger Anbindungspunkt, in welchem die Seitenwellen 26 und 28 an die elektrischen Maschinen 14 und 16 zumindest mittelbar angebunden sind.

Schließlich ist besonders gut aus Fig. 1 erkennbar, dass in Fahrzeugquerrichtung beziehungsweise in axialer Richtung der jeweiligen elektrischen Maschine 14 beziehungsweise 16 zwischen den elektrischen Maschinen 14 und 16 wenigstens eine Komponente 94 angeordnet ist. Die Komponente 94 umfasst beispielsweise eine Kupplung, mittels welcher beispielsweise die Rotoren der elektrischen Maschinen 14 und 16 drehfest miteinander verbindbar sind. Alternativ oder zusätzlich umfasst die Komponente 94 einen optionalen Retarder beziehungsweise eine Dauerbremse, mittels welchem beziehungsweise welcher das jeweilige Rad 18 beziehungsweise 20, insbesondere über den jeweiligen Rotor, abbremsbar ist.

Um die elektrischen Maschinen 14 und 16 mit elektrischer Energie beziehungsweise elektrischem Strom versorgen und somit in dem jeweiligen Motorbetrieb betreiben zu können, ist beispielsweise wenigstens ein zum Speichern von elektrischer Energie ausgebildeter Energiespeicher 92 vorgesehen. Aus Fig. 5 ist erkennbar, dass mehrere Energiespeicher 92 vorgesehen sind, mittels welchen elektrische Energie beziehungsweise elektrischer Strom gespeichert werden kann. Beispielsweise ist der jeweilige Energiespeicher 92 als Batterie, insbesondere als Hochvolt-Batterie (HV-Batterie), ausgebildet. Dabei ist es vorzugsweise vorgesehen, dass der jeweilige Energiespeicher 92 zumindest teilweise in Fahrzeugquerrichtung zwischen den Längsträgern 32 und 34 angeordnet ist. Beispielsweise ist zumindest einer der Energiespeicher 92 in Fahrzeughochrichtung oberhalb der elektrischen Maschinen 14 und 16 angeordnet, sodass die elektrischen Maschinen 14 und 16 in Fahrzeughochrichtung zumindest teilweise, insbesondere zumindest überwiegend oder vollständig, durch den wenigstens einen Energiespeicher 92 überdeckt sind. Ferner ist es vorzugsweise vorgesehen, dass die elektrischen Maschinen 14 und 16 in Fahrzeughochrichtung unterhalb der Längsträger 32 und 34 angeordnet sind.

## Patentansprüche

1. Antriebsvorrichtung für ein Kraftfahrzeug, mit einer einer Fahrzeugachse (12) zugeordneten ersten elektrischen Maschine (14), mit einer der Fahrzeugachse (12) zugeordneten zweiten elektrischen Maschine (16), mit wenigstens einem der Fahrzeugachse (12) zugeordneten ersten Rad (18), mit wenigstens einem der Fahrzeugachse (12) zugeordneten zweiten Rad (20), mit einer der ersten elektrischen Maschine (14) zugeordneten ersten Seitenwelle (26), über welche das erste Rad (18) von der ersten elektrischen Maschine (14) antreibbar ist, und mit einer der zweiten elektrischen Maschine (16) zugeordneten zweiten Seitenwelle (28), über welche das zweite Rad (20) von der zweiten elektrischen Maschine (16) antreibbar ist,
wobei
- in axialer Richtung der ersten elektrischen Maschine (14) die zweite elektrische Maschine (16) zwischen der ersten elektrischen Maschine (14) und dem ersten Rad (18) angeordnet ist; und
- in axialer Richtung der zweiten elektrischen Maschine (16) die erste elektrische Maschine (14) zwischen der zweiten elektrischen Maschine (16) und dem zweiten Rad (20) angeordnet ist
- der ersten elektrischen Maschine (14) ein erstes Getriebe (62) zugeordnet ist, über welches die erste Seitenwelle (26) von der ersten elektrischen Maschine (14) antreibbar ist;
- der ersten elektrischen Maschine (14) ein zweites Getriebe (64) zugeordnet ist, über welches das erste Rad (18) von der ersten Seitenwelle (26) antreibbar ist;
- der zweiten elektrischen Maschine (16) ein drittes Getriebe (66) zugeordnet ist, über welches die zweite Seitenwelle (28) von der zweiten elektrischen Maschine (16) antreibbar ist; und
- der zweiten elektrischen Maschine (16) ein viertes Getriebe (68) zugeordnet ist, über welches das zweite Rad (20) von der zweiten Seitenwelle (26) antreibbar ist,
- eine Abtriebsseite der ersten elektrischen Maschine (14) in Richtung zu dem zweiten Rad (20) gerichtet ist und eine Abtriebsseite der zweiten elektrischen Maschine (16) in Richtung zu dem ersten Rad (18) gerichtet ist,
- in axialer Richtung der ersten elektrischen Maschine (14) das erste Getriebe (62) zwischen der ersten elektrischen Maschine (14) und dem zweiten Rad (20) angeordnet ist,
und in axialer Richtung der zweiten elektrischen Maschine (16) das zweite Getriebe (64) zwischen der zweiten elektrischen Maschine (16) und dem ersten Rad (18) angeordnet ist,
wobei das erste und dritte Getriebe (62, 66) und/oder das zweite und vierte Getriebe (64, 68) baugleich ausgebildet und um die Fahrzeugquerrichtung relativ zueinander verdreht angeordnet sind
**dadurch gekennzeichnet, dass**
- die jeweilige elektrische Maschine (14, 16) einen Stator und einen Rotor aufweist, welcher um eine Drehachse (36, 38) relativ zu dem Stator drehbar ist, wobei die Drehachsen (36, 38) der Rotoren zusammenfallen
- sich die Seitenwellen (26, 28) bezogen auf eine Einbaulage in dem Kraftfahrzeug gemäß einer entlang einer Fahrzeuglängsrichtung von hinten nach vorne verlaufender Blickrichtung nicht überkreuzen und sich gemäß einer entlang einer Fahrzeughochrichtung von oben nach unten verlaufender Blickrichtung überkreuzen.

2. Antriebsvorrichtung nach einem der vorhergehenden Ansprüche,
**dadurch gekennzeichnet, dass**
das erste und zweite und dritte und vierte Getriebe (62, 64, 66, 68) als Stirnradgetriebe ausgebildet sind.

3. Antriebsvorrichtung nach einem der vorhergehenden Ansprüche,
**dadurch gekennzeichnet, dass**
die jeweilige Seitenwelle (26, 28) eine Eingangsseite (70, 72), über welche von der jeweils zugeordneten elektrischen Maschine (14, 16) bereitgestellte Drehmomente in die jeweilige Seitenwelle (26, 28) einleitbar sind und eine Ausgangsseite (74, 76) aufweist, über welche die Drehmomente aus der jeweiligen Seitenwelle (26, 28) ausleitbar und auf das jeweilige Rad (18, 20) übertragbar sind, wobei die Ausgangsseite (74) der ersten Seitenwelle (26) in Fahrzeughochrichtung unterhalb der Eingangsseite (72) der zweiten Seitenwelle (28) angeordnet ist,
und wobei bezogen auf die Einbaulage in dem Kraftfahrzeug die Ausgangsseite (74) der ersten Seitenwelle (26) in Fahrzeughochrichtung unter der Ausgangsseite (76) der zweiten Seitenwelle (28) angeordnet ist,
und wobei die Eingangsseite (70) der ersten Seitenwelle (26) in Fahrzeughochrichtung unterhalb der Ausgangsseite (74) der ersten Seitenwelle (26), unterhalb der Eingangsseite (72) der zweiten Seitenwelle (28) und unterhalb der Ausgangsseite (76) der zweiten Seitenwelle (28) angeordnet ist.

4. Antriebsvorrichtung nach einem der vorhergehenden Ansprüche,
**dadurch gekennzeichnet, dass**
die erste Seitenwelle (26) um die Fahrzeuglängsrichtung rotationssymmetrisch zur zweiten Seitenwelle (28) angeordnet ist.

5. Antriebsvorrichtung nach Anspruch 1,
**dadurch gekennzeichnet, dass**
in axialer Richtung der jeweiligen elektrischen Maschine (14, 16) zwischen den elektrischen Maschinen (14, 16) eine Dauerbremse angebunden oder anbindbar ist, mittels welcher wenigstens eines der Räder abbremsbar ist.

6. Antriebsvorrichtung nach Anspruch 5,
**dadurch gekennzeichnet, dass**
die Dauerbremse an zumindest einen Rotor der beiden elektrischen Maschinen (14, 16) gekoppelt oder koppelbar ist.

## Claims

1. Drive device for a motor vehicle, comprising a first electrical machine (14) assigned to a vehicle axle (12), comprising a second electrical machine (16) assigned to the vehicle axle (12), comprising at least one first wheel (18) assigned to the vehicle axle (12), comprising at least one second wheel (20) assigned to the vehicle axle (12), comprising a first lateral shaft (26), which is assigned to the first electrical machine (14) and via which the first wheel (18) can be driven by the first electrical machine (14), and comprising a second lateral shaft (28), which is assigned to the second electrical machine (16) and via which the second wheel (20) can be driven by the second electrical machine (16),
wherein
- the second electrical machine (16) is arranged between the first electrical machine (14) and the first wheel (18) in the axial direction of the first electrical machine (14); and
- the first electrical machine (14) is arranged between the second electrical machine (16) and the second wheel (20) in the axial direction of the second electrical machine (16);
- the first electrical machine (14) is assigned a first transmission (62), via which the first lateral shaft (26) can be driven by the first electrical machine (14);
- the first electrical machine (14) is assigned a second transmission (64), via which the first wheel (18) can be driven by the first lateral shaft (26);
- the second electrical machine (16) is assigned a third transmission (66), via which the second lateral shaft (28) can be driven by the second electrical machine (16); and
- the second electrical machine (16) is assigned a fourth transmission (68), via which the second wheel (20) can be driven by the second lateral shaft (26),
- a drive side of the first electrical machine (14) is oriented towards the second wheel (20) and a drive side of the second electrical machine (16) is oriented towards the first wheel (18),
- the first transmission (62) is arranged between the first electrical machine (14) and the second wheel (20) in the axial direction of the first electrical machine (14),
and the second transmission (64) is arranged between the second electrical machine (16) and the second wheel (18) in the axial direction of the second electrical machine (16),
wherein the first and third transmission (62, 66) and/or the second and fourth transmission (64, 68) are identical in design and are arranged so as to be rotated relative to one another about the vehicle transverse direction,
**characterised in that**
- each electrical machine (14, 16) comprises a stator and a rotor, which can be rotated about an axis of rotation (36, 38) relative to the stator, wherein the axes of rotation (36, 38) of the rotors coincide,
- the lateral shafts (26, 28), in an installed position in the motor vehicle, do not intersect when viewed from a direction that extends from the rear to the front in the vehicle longitudinal direction and intersect when viewed from a direction that extends from top to bottom in a vehicle vertical direction.

2. Drive device according to any of the preceding claims, **characterised in that** the first, second, third and fourth transmissions (62, 64, 66, 68) are designed as spur gear transmissions.

3. Drive device according to any of the preceding claims, **characterised in that** each lateral shaft (26, 28) comprises an input side (70, 72), via which torques provided by the respectively assigned electrical machine (14, 16) can be introduced into the relevant lateral shaft (26, 28), and an
output side (74, 76), via which the torques can be diverted from the relevant lateral shaft (26, 28) and transferred to the relevant wheel (18, 20), wherein the output side (74) of the first lateral shaft (26) is arranged below the input side (72) of the second lateral shaft (28) in the vehicle vertical direction,
and wherein, in the installed position in the motor vehicle, the output side (74) of the first lateral shaft (26) is arranged below the output side (76) of the second lateral shaft (28) in the vehicle vertical direction, and wherein the input side (70) of the first lateral shaft (26) is arranged below the output side (74) of the first lateral shaft (26), below the input side (72) of the second lateral shaft (28) and below the output side (76) of the second lateral shaft (28) in the vehicle vertical direction.

4. Drive device according to any of the preceding claims, **characterised in that** the first lateral shaft (26) is arranged so as to be rotationally symmetrical to the second lateral shaft (28) about the vehicle longitudinal direction.

5. Drive device according to claim 1, **characterised in that**
a sustained-action brake by means of which at least one of the wheels can be braked is or can be connected between the electrical machines (14, 16) in the axial direction of the relevant electrical machine (14, 16).

6. Drive device according to claim 5, **characterised in that**
the sustained-action brake is or can be coupled to at least one rotor of the two electrical machines (14, 16).

## Revendications

1. Dispositif propulseur pour un véhicule automobile, avec un premier moteur électrique (14) associé à un essieu de véhicule (12), avec un second moteur électrique (16) associé à l'essieu de véhicule (12), avec au moins une première roue (18) associée à l'essieu de véhicule (12), avec au moins une seconde roue (20) associée à l'essieu de véhicule (12), avec un premier arbre latéral (26) associé au premier moteur électrique (14) par le biais duquel la première roue (18) peut être entraînée par le premier moteur électrique (14), et avec un second arbre latéral (28) associé au second moteur électrique (16) par le biais duquel la seconde roue (20) peut être entraînée par le second moteur électrique (16),
dans lequel
- le second moteur électrique (16) est disposé dans la direction axiale du premier moteur électrique (14) entre le premier moteur électrique (14) et la première roue (18) ; et
- le premier moteur électrique (14) est disposé dans la direction axiale du second moteur électrique (16) entre le second moteur électrique (16) et la seconde roue (20) ;
- un premier engrenage (62) par le biais duquel le premier arbre latéral (26) peut être entraîné par le premier moteur électrique (14) est associé au premier moteur électrique (14) ;
- un deuxième engrenage (64) par le biais duquel la première roue (18) peut être entraînée par le premier arbre latéral (26) est associé au premier moteur électrique (14) ;
- un troisième engrenage (66) par le biais duquel le second arbre latéral (28) peut être entraîné par le second moteur électrique (16) est associé au second moteur électrique (16) ; et
- un quatrième engrenage (68) par le biais duquel la seconde roue (20) peut être entraînée par le second arbre latéral (26) est associé au second moteur électrique (16),
- un côté sortie du premier moteur électrique (14) est orienté en direction de la seconde roue (20) et un côté sortie du second moteur électrique (16) est orienté en direction de la première roue (18),
- le premier engrenage (62) est disposé dans la direction axiale du premier moteur électrique (14) entre le premier moteur électrique (14) et la seconde roue (20),
le second engrenage (64) est disposé dans la direction axiale du second moteur électrique (16) entre le second moteur électrique (16) et la première roue (18), dans lequel les premier et troisième engrenages (62, 66) et/ou les deuxième et quatrième engrenages (64, 68) sont réalisés avec la même construction et disposés de manière tordue autour de la direction transversale de véhicule l'un par rapport à l'autre,
**caractérisé en ce que**
- le moteur électrique respectif (14, 16) présente un stator et un rotor qui est rotatif autour d'un axe de rotation (36, 38) par rapport au stator, dans lequel les axes de rotation (36, 38) des rotors coïncident,
- les arbres latéraux (26, 28) ne se croisent pas par rapport à une position de montage dans le véhicule automobile conformément à une direction du regard s'étendant le long d'une direction longitudinale de véhicule de l'arrière vers l'avant et se croisent conformément à une direction du regard s'étendant le long d'une direction de hauteur de véhicule du haut vers le bas.

2. Dispositif propulseur selon une des revendications précédentes, **caractérisé en ce que**
les premier et deuxième et troisième et quatrième engrenages (62, 64, 66, 68) sont réalisés en tant qu'engrenage droit.

3. Dispositif propulseur selon une des revendications précédentes,
**caractérisé en ce que**
l'arbre latéral respectif (26, 28) présente un côté entrée (70, 72) par le biais duquel des couples de rotation mis à disposition par le moteur électrique associé respectivement (14, 16) peuvent être introduits dans l'arbre latéral respectif (26, 28) et un côté sortie (74, 76) par le biais duquel les couples de rotation peuvent être déviés de l'arbre latéral respectif (26, 28) et peuvent être transmis sur la roue respective (18, 20), dans lequel le côté sortie (74) du premier arbre latéral (26) est disposé dans la direction de hauteur de véhicule en dessous du côté entrée (72) du second arbre latéral (28),
et dans lequel le côté sortie (74) du premier arbre latéral (26) est disposé par rapport à la position de montage dans le véhicule automobile dans la direction de hauteur de véhicule sous le côté sortie (76) du second arbre latéral (28), et dans lequel le côté entrée (70) du premier arbre latéral (26) est disposé dans la direction de hauteur de véhicule en dessous du côté sortie (74) du premier arbre latérale (26), en dessous du côté entrée (72) du second arbre latéral (28) et en dessous du côté sortie (76) du second arbre latéral (28).

4. Dispositif propulseur selon une des revendications précédentes,
**caractérisé en ce que**
le premier arbre latéral (26) est disposé à symétrie de rotation autour de la direction longitudinale de véhicule par rapport au second arbre latéral (28).

5. Dispositif propulseur selon la revendication 1,
**caractérisé en ce que**
un frein continu au moyen duquel au moins une des roues peut être freinée est relié ou peut être relié dans la direction axiale du moteur électrique respectif (14, 16) entre les moteurs électriques (14, 16).

6. Dispositif propulseur selon la revendication 5,
**caractérisé en ce que**
le frein continu est couplé ou peut être couplé à au moins un rotor des deux moteurs électriques (14, 16).
